# EUROPEAN PATENT SPECIFICATION

(11) **EP 0 637 288 B1**
(45) Date of publication and mention of the grant of the patent: **27.12.1996**
(21) Application number: 93912004.4
(22) Date of filing: 21.04.1993
(51) Int. Cl.: B60Q 1/44, G01P 15/08

(54) **AUTOMATIC CRASH ALARM FOR AUTOMOTIVE VEHICLES**
AUTOMATISCHE AUFPRALLANLAGE FÜR KRAFTFAHRZEUGE
ALARME AUTOMATIQUE DE SIGNALISATION D'UN ACCIDENT POUR VEHICULES AUTOMOBILES

(30) Priority: 22.04.1992 NL 9200726
(43) Date of publication of application: 08.02.1995
(73) Proprietor: PETERS, Johannes Petrus, NL-6641 KE Beuningen (NL); Janssen, Aloysius Wilhelmus Hendrikus, NL-6538 GC Nijmegen (NL)
(72) Inventor: JANSSEN, Aloysius, Wilhelmus, Hendrikus, NL-6538 GC Nijmegen (NL)
(74) Representative: Lobatto, Jacob Louis, Drs.
(86) International application number: NL9300085
(87) International publication number: WO9321033

(56) References cited:
- DE-A- 2 709 156
- DE-A- 3 010 452
- DE-A- 3 021 317
- DE-C- 942 663
- FR-A- 2 160 252
- US-A- 4 849 655

## Description

The invention relates to an electronic mechanical device for automotive vehicles in order to actuate automatically the alarm light installation as presently installed in substantially all automotive vehicles without any action of the driver. This is the more important since on many occasions the driver will not be in a condition to take any action after a crash, either for a short time, being in a temporary shock condition, for considerable time, being seriously injured but after considerable time still able to act, or permanently being unconscious or dead.

The so-called delay-switches are known, such as a switch, presented in Dutch patent application 66.16240, which signals the standstill of an automotive vehicle, as well as the switch described in German patent specification 900.658, which also signals exclusively the standstill of an automotive vehicle.

FR-A-2.160.252 describes a device for registering a collision of an automotive vehicle by detecting the occurrence of the resulting extraoridinary deceleration or acceleration by means of a sensor system causing automatic activation of a lights installation such as a stop light and/or a back light. This sensor system is however unidirectional.

Similarly US-A-4.849.655 describes a device for detecting the occurrence of an extraoridinary deceleration or acceleration by means of an automotive vehicle by means of a sensor system, comprising a sensor unit provided with a deflectable spring fixed at one end to a housing whereas at the other end a permanent magnet is mounted with a so-called Hall effect sensor underneath said magnet. This sensor system is as well unidirectional.

Apart from the above, various types of signalliung systems are known from the process industry, but there is nowhere any reason of a signalling system as presented by the device according to the present invention.

There is a need for a device that warns the other traffic participants immediately for the dangerous situation arising from a crash involving one or more automotive vehicles, without any action by the driver being required.

It is thus an object of the invention to provide a solution to restrict drastically the number of people concerned in the follow-up of a crash.

To achieve that object the invention provides a device for registering a collision of an automotive vehicle whereby, if the automotive vehicle is involved in a collision a detection will occur of the resulting extraordinary deceleration or acceleration by means of a sensor system, comprising a sensor unit, causing automatic activation of the alarm lights installation as present on the automotive vehicle, wherein said sensor unit is provided by a closed(tight) helical spring, fixed vertically at one end to a housing, whereas being deflectable in each direction at the other end, where a permanent magnet is mounted; a so-called Hall effect sensor being positioned underneath said magnet.

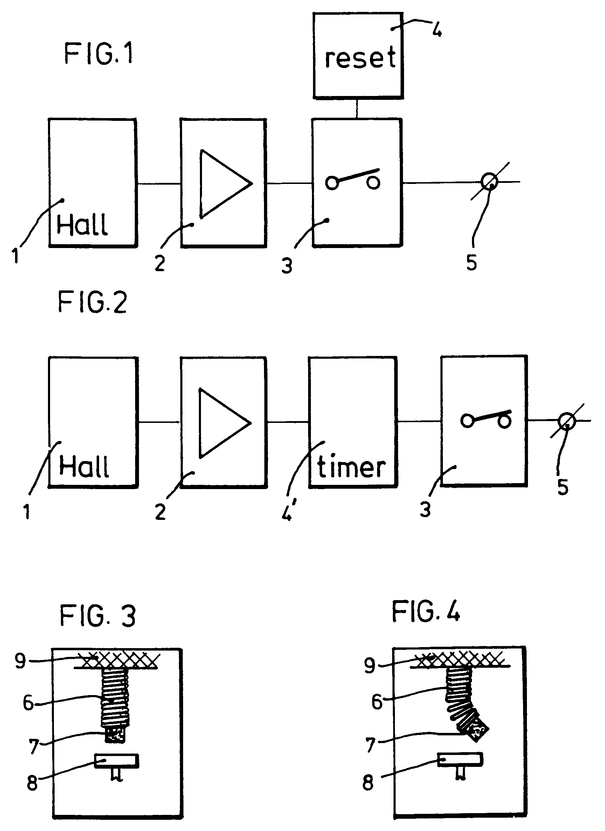

An embodiment of a device according to the present invention as installed in an automotive vehicle, is shown in Figs. 1 and 2 iun a block diagram, presenting a so-called Hall-effect sensor 1, an amplifier 2, a switch 3, a reset unit 4 (Fig. 1) or a timer 4' (Fig. 2) and an outlet to the existing alarm light installation 5.

In the embodiment as shown in Fig. 3 a closed helical spring 6 was selected, the consideration being that an open helical spring will allow a magnet 7 to move as a consequence of a bad road surface or on sudden braking, whereas magnet 7 should move only as a consequence of a deceleration or acceleration in the order of magnitude as occurs in case of a collision of an automotive vehicle either with another automotive vehicle, fixed objects, such as for example houses, trees and similar, or other objects such as other cars or even animals, including human beings.

In Fig. 3 spring 6 is fixed at one end on the housing 9, whereas at the other end a permanent magnet 7 is mounted; a so-called Hall effect sensor 8 is positioned underneath magnet 7. As soon as the magnet 7 moves away from Hall-sensor 8, as shown in Fig. 4, as a deceleration or acceleration has taken place, such as in collisions, as shown in Fig. 4 spring 6 will allow magnet 7 to move away from Hall-sensor 8, which has the specific property of detecting a change in magnetic field, which detection will be received by amplifier 2 in Figs. 1 and 2, and is passed on after ammplification to switch 3, which in turn will activate the alarm lights installation 5, without requiring any activity by the driver of the vehicle.

The connection thus caused automatically may be reset again manually by means of a reset switch 4 (Fig. 1).

Instead of reset switch 4 use can also be made of a timer 4' (Fig. 2), which will cause an automatic reset of the installation into the original position, as existed prior to the collision, after a predetermined period of time.

Thus for example the closed helical spring might be replaced by a resilient rod, plastic, metal or a combination thereof, as long as it meets the condition that it is not activated by vibrations such as caused by an uneven road surface or the decelerations and accelerations customary in normal traffic.

## Claims

1. A device for registering a collision of an automotive vehicle whereby, if the automotive vehicle is involved in a collision a detection will occur of the resulting extraordinary deceleration or acceleration by means of a sensor system, comprising a sensor unit, causing automatic activation of the alarm lights installation as present on the automotive vehicle, **characterised in that** said sensor unit is provided by a closed(tight) helical spring (6) or a resilient rod fixed vertically at one end to a housing (9), whereas being deflectable in each direction at the other end, where a permanent magnet (7) is mounted; a so-called Hall effect sensor (8) being positioned underneath magnet (7).

2. A device according to claim 1, **characterised in that** the activation as realised automatically is maintained for a predetermined period of time, and will be switched back automatically by a timer (4') after said period of time into the original position as prior to the collision.

3. A device according to claim 1 or 2, **characterised in that** the activation resulting therefrom can be reset into the original position as prior to the collision by means of a manual switch (4).

4. An automotive vehicle comprising a device for registering a collision of an automotive vehicle, **characterised in that** said device is a device acccording to any one of claims 1 to 3.

## Patentansprüche

1. Einrichtung für die Registrierung eines Zusammenstosses eines Auto's wobei, falls das Auto am Zusammenstoss beteiligt ist, wird eine Messfühlung der resultierenden ausserordentlichen Verzögerung oder Beschleunigung stattfinden behilfs eines Sensorsystem, dass eine Sensoreinheit enthält, dass automatische Aktivierung der Alarmleuchteninstallation wie am Auto anwesend, **dadurch gekennzeichnet** dass die Sensoreinheit versehen ist mit einer geschlossenen(dichten) Spiralfeder (6), die vertikal an einem Ende eines Hauses (9) fixiert ist, am anderen Ende aber, wo ein permanenter Magnet ist angesetzt, in jede Richtung biegsam ist; unter Magnet (7) ein sogenannter Hall-effekt Taster (8) ist aufgestellt.

2. Einrichtung nach Anspruch 1, **dadurch gekennzeichnet** dass die automatisch zu Stande gebrachte Aktivierung für eine vorbestimmte Zeitdauer angehalten wird, und nach Verlauf dieser Zeitdauer mit einem Zeitschalter (4') automatisch zur Originalstellung wie vorangehend am Zusammenstoss zurückgeschaltet wird.

3. Einrichtung nach Anspruch 1 oder 2, **dadurch gekennzeichnet** dass die daraus hervorgehende Aktivierung mittels einem manuellen Schalter (4) in der Originalstellung wie vorangehend am Zusammenstoss zurückgeschaltet werden kann.

4. Auto versehen mit einer Einrichtung für die Registration eines Zusammenstosses eines Autos, **dadurch gekennzeichnet** dass diese Einrichting eine Einrichtung nach einem der Ansprüche 1 bis 3 ist.

## Revendications

1. Dispositif pour la registration d'une collision d'une auto par laquelle, si l'auto est sujet d'une collision, une détection sera fait de la décéleration ou accéleration extraordinaire à l'aide d'une système de sensors, comprenant une unité de sensor,qui produits une activation automatique de l'installation des lampes d'alarme qui sont présent à l'auto, **caracterisé par le fait que** ladite unité de sensor contient un ressort helicale fermé(comprimé) (6), fixé verticalement à une extrémité d'une maison (9), mais capable de déviation dans tout directions à l'autre extrémité, où est fixé un aimant permanent (7); un sensor pour le soi-disant effet de Hall (8) étant placé au dessous de l'aimant (7).

2. Dispositif selon le revendication 1, **caracterisé par le fait que** l'activation qui est fait automatiquement est maintenu pour une durée de temps determinée préalablement et sera remis dans la position originale comme avant la collision automatiquement par un interrupteur horaire (4') après ladite durée de temps.

3. Dispositif selon le revendication 1 ou 2, **caracterisé par le fait que** l'activation résultant peut être remis dans la position originale comme avant la collision par un interrupteur manuel.

4. Auto avec un dispositif pour la régistration d'une collision de l'auto, **caracterisé par le fait que** cet dispositif est un dispositif selon une des revendications 1 à 3.
